Europäisches Patentamt

European Patent Office

Office européen des brevets

(19)

(11) **EP 0 576 358 B1**

(12) **FASCICULE DE BREVET EUROPEEN**

(45) Date de publication et mention
de la délivrance du brevet:
**29.07.1998 Bulletin 1998/31**

(51) Int Cl.⁶: **H04B 10/18**

(21) Numéro de dépôt: **93401616.3**

(22) Date de dépôt: **23.06.1993**

(54) **Procédé et système de transmission optique à très longue distance de solitons**

Verfahren und Vorrichtung zur optischen Übertragung von Solitonen über lange Abstände

Method and system of very long distance soliton optical transmission

(84) Etats contractants désignés:
**DE FR GB**

(30) Priorité: **24.06.1992 FR 9207722**

(43) Date de publication de la demande:
**29.12.1993 Bulletin 1993/52**

(73) Titulaire: **FRANCE TELECOM**
**75015 Paris (FR)**

(72) Inventeur: **Abram, Izo**
**F-92210 Saint-Cloud (FR)**

(74) Mandataire: **Schrimpf, Robert et al**
**Cabinet Regimbeau**
**26, Avenue Kléber**
**75116 Paris (FR)**

(56) Documents cités:
**US-A- 5 111 322**

- **OPTICS COMMUNICATIONS. vol. 85, no. 2/3, 1 Septembre 1991, AMSTERDAM NL pages 195 - 201 T.GEORGES 'Amplifier noise jitter of two interacting solitons'**
- **ELECTRONICS LETTERS. vol. 27, no. 18, 29 Août 1991, STEVENAGE GB pages 1662 - 1663 M.NAKAZAWA ET AL 'Observation of nonlinear interactions in 20 Gbit/s soliton transmission over 500 km using Erbium-doped fibre amplifiers'**

## Description

La présente invention est relative à un procédé de transmission optique à très longue distance de solitons ainsi qu'au système de transmission correspondant.

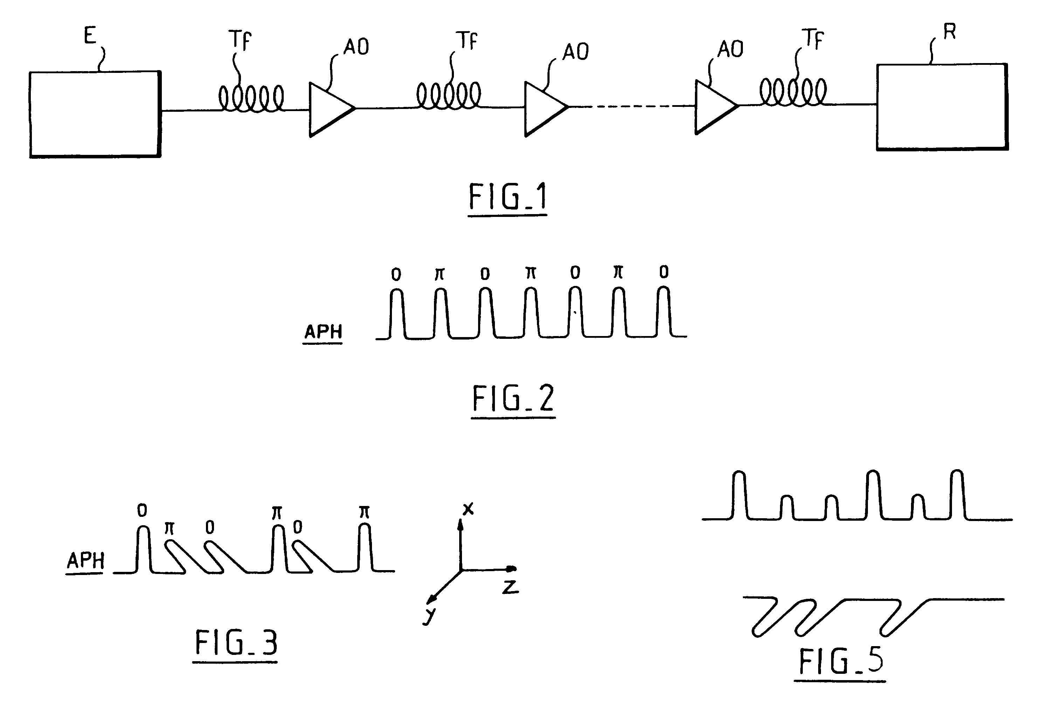

La transmission d'impulsions lumineuses dans des fibres optiques peut atteindre actuellement des distances intercontinentales, grâce au développement d'amplificateurs optiques tels que les amplificateurs à fibre dopée ou à semiconducteur, les amplificateurs Raman, les amplificateurs paramétriques, etc. Ces amplificateurs permettent la transmission de données à des débits bien plus élevés et des coûts bien plus bas que les régénérateurs électroniques. Une représentation schématique d'un système de transmission entre un émetteur E et un récepteur R, comportant des amplificateurs optiques AO est donnée en Fig. 1. Le système consiste en plusieurs tronçons $T_f$ de fibre optique monomode reliés entre eux afin de transmettre des impulsions lumineuses. Le système inclut également des dispositifs qui amplifient ces impulsions lumineuses en leur injectant de l'énergie optique et sans les transformer en impulsions électroniques. L'amplification optique peut être "distribuée" tout le long de la fibre (c'est le cas, par exemple, des amplificateurs Raman ou des amplificateurs à faible dopage de fibre) ou "groupée" sur des modules d'extension relativement faible et espacés de 25 à 150 km selon les caractéristiques visées du système de transmission.

Toutefois, l'amplification optique ne remet pas en forme le signal transmis et, par conséquent, les déformations que chaque impulsion subit au cours de sa propagation s'accumulent, limitant ainsi la fiabilité de la transmission. Les impulsions optiques sont généralement sujettes à deux phénomènes physiques qui provoquent des déformations, notamment la dispersion chromatique et la non-linéarité optique de la fibre.

Il existe, cependant, des impulsions lumineuses spéciales, les "solitons", dont les caractéristiques de forme et d'intensité sont telles que les deux types de déformation (chromatique et non-linéaire) s'annulent mutuellement. Cette annulation se produit lorsque la dispersion chromatique de la fibre est du type "anormal" avec un coefficient négatif pour la dispersion de la vitesse de groupe de la lumière. Pour les fibres en silice utilisées actuellement, cette condition est vérifiée dans la fenêtre spectrale dite "d'atténuation minimale" au voisinage des longueurs d'onde de 1,5 μm.

En général, la propagation d'impulsions lumineuses dans les fibres optiques est décrite par l'équation de Schroedinger non-linéaire. Les impulsions lumineuses dont le profil temporel du champ électrique a la forme d'une sécante hyperbolique (sech x = 1/ cosh x), sont des solutions propres de cette équation et constituent des solitons. Ces solitons optiques peuvent donc se propager dans une fibre optique sur des distances intercontinentales sans aucune déformation, à condition que leur atténuation soit compensée par des amplifications périodiques. L'état de l'art et les performances actuelles des systèmes de communications optiques par impulsions soliton sont résumés dans les Références :

[1]     S.G. Evangelides, L.F. Mollenauer, J.P. Gordon, and N.S. Bergano, "Polarization multiplexing with solitons",
Journal of Lightwave Technology, vol. 10, 28-35 (1992).

[2]     M. Nakazawa, K. Suzuki, E. Yamada, and H. Kubota,
"Observation of nonlinear interactions in 20 Gbits/ s soliton transmission over 500 km using erbium-doped fiber amplifiers" Electronics Letters, vol. 27, 1662-1663 (1991).

[3]     L.F. Mollenauer, M.J. Neubelt, S.G. Evangelides, J.P. Gordon, J.R. Simpson, and L.G. Cohen, "Experimental study of soliton transmission over more than 10000 km in dispersion-shifted fiber" Optics Letters, vol. 15, 1203-1205 (1990).

La technique antérieure présente des inconvénients décrits ci-après.

Le codage par modulation d'amplitude utilisé actuellement pour les transmissions par soliton est du type tout-ou-rien (OOK) : la présence d'une impulsion dans une fenêtre temporelle (c'est-à-dire, un intervalle de temps défini par la cadence d'une horloge, intervalle appelé également "temps-bit") correspond au chiffre binaire 1, alors que son absence dénote le 0. La transmission du chiffre binaire 11 nécessite donc le lancement de deux solitons dans la fibre, dans deux temps-bit consécutifs. Pour chacun des deux solitons, la présence de l'autre perturbe l'équilibre délicat entre la déformation chromatique et la déformation non-linéaire et ceci se manifeste comme une interaction entre les solitons : au cours de leur propagation, les deux solitons coalescent et puis se séparent périodiquement. Lorsque la séparation initiale $q_o$ entre les solitons est de l'ordre de 3 largeurs solitoniques LS ($q_o = 3$ LS, où la largeur solitonique est définie comme la pleine largeur de l'impulsion à mi-hauteur), les impulsions coalescent après une propagation de 450 km, ce qui compromet la fiabilité du décodage au-delà de 350 km (cf. la référence [2]), alors qu'une transmission fiable sur 10000 km (correspondant à une distance de coalescence de 13000 km) nécessite des séparations initiales de $q_o = 6$ LS (cf. la référence [3]). Par conséquent, en plus de la limitation sur la portée de transmission, les interactions entre solitons placent une valeur minimale au temps-bit, ce qui constitue une limitation du débit.

Une deuxième limitation au débit et à la portée de la transmission par solitons émane du bruit qui est introduit lors de l'amplification optique du train d'impulsions. A cause du couplage entre la vitesse et l'amplitude des solitons, ce bruit se manifeste généralement par une composante aléatoire de la vitesse des solitons, ce qui se traduit à la réception par une imprécision de la position du soliton dans la trame des temps-bit. La portée et le débit de transmission fiable sont donc limités aux valeurs pour lesquelles la gigue du soliton due au bruit d'amplification ne dépasse pas une fraction du temps-bit (limite de Gordon-Haus, cf. la référence [4] :

[4]    J.P. Gordon et H.A. Haus,
"Random walk of coherently amplified solitons in optical fiber transmission",
Optics Letters, vol. 11, 665-667 (1986)).

Le but de la présente invention est de pourvoir à un procédé de communication par solitons qui permet de compenser les interactions entre solitons dans le but d'augmenter la portée et/ou le débit de transmission de données. La compensation des interactions élimine la coalescence d'impulsions voisines et produit des trains de solitons robustes, résistant aux fluctuations aléatoires de vitesse et de position, telles que la gigue produite par le bruit d'amplification sur des solitons isolés.

Le procédé inclut des méthodes de codage d'informations qui maintiennent la compensation des interactions entre solitons et préservent en grande partie le caractère stable d'un train d'impulsions.

Des exemples d'émetteurs et de récepteurs d'impulsions optiques, adaptés aux exigences de transmission de trains de solitons stabilisés, sont également décrits.

La mise en oeuvre de communications optiques par train de solitons stabilisés peut comporter un ou plusieurs canaux de transmission de données. Lorsque le système comporte plus d'un canal de transmission, ces canaux sont multiplexés temporellement.

Il a déjà été montré dans la publication "Amplifier noise jitter of two interacting solitons", T. Georges, Optics Communications, Vol. 85, no. 2/3, 1 Septembre 1991, Amsterdam NL, pages 195-201, que la gigue d'un train de solitons pouvait être modifiée en jouant sur l'interaction entre solitons.

La présente invention a quant à elle pour objet un procédé de transmission optique à très longue distance d'au moins un train de solitons, comprenant les étapes suivantes :

- génération d'au moins un train d'impulsions lumineuses, chaque impulsion étant émise à l'intérieur d'une fenêtre temporelle, les fenêtres temporelles successives étant contiguës et de même durée, les impulsions lumineuses étant en outre de même forme et de même amplitude, l'amplitude étant supérieure à un seuil nécessaire à l'obtention d'impulsions ayant un caractère solitonique lors de la propagation du train dans une fibre optique monomode ;
- codage des impulsions lumineuses dudit train pour y introduire des informations à transmettre ;
- injection ou couplage dudit train d'impulsions lumineuses codées dans ladite fibre optique ;

- propagation dudit train d'impulsions codées dans ladite fibre optique monomode sous forme d'impulsions solitoniques, la fibre optique monomode présentant à la longueur d'onde optique des impulsions un indice de réfraction non-linéaire et une dispersion anormale pour la vitesse de groupe des impulsions lumineuses ;
- amplification optique des impulsions solitoniques au cours de leur propagation dans la fibre ;
- réception et décodage dudit train d'impulsions solitoniques, caractérisé en ce qu'il comporte également, après l'étape de génération, une étape de stabilisation de chaque soliton à l'intérieur de sa fenêtre temporelle, et donc de stabilisation dudit train de solitons, par introduction d'une interaction répulsive entre chaque soliton et les deux solitons adjacents immédiatement précédent et suivant, ladite interaction répulsive étant obtenue par modulation de phase optique des solitons produisant une alternance de phase 0 et $\pi$ entre solitons successifs.

Selon une disposition préférée du mode de réalisation précité, ledit codage est effectué par modulation de polarisation des solitons, afin de préserver le caractère stabilisé du train de solitons, c'est-à-dire le caractère répulsif stabilisant des interactions entre solitons adjacents.

Selon une modalité avantageuse de la disposition susdite, ledit codage est choisi parmi le groupe comprenant le codage binaire avec deux valeurs de modulation, le codage discret à M valeurs de modulation, avec M > 2, ou le codage analogique avec une continuité de valeurs de modulation.

Conformément à l'invention, la réception dudit train de solitons comporte une étape de discrimination entre la modulation produisant le codage des solitons et la modulation produisant la stabilisation des solitons.

Selon une modalité préférée de mise en oeuvre du procédé conforme à l'invention, lorsque la génération dudit train d'impulsions lumineuses génère un débit d'impulsions inférieur à un débit de transmission désiré, on porte la valeur du débit généré à la valeur du débit de transmission désiré par les étapes suivantes :

i) séparation du train généré en N voies identiques, N >1 étant un entier ;
ii) introduction d'un retard relatif entre les N voies, ce retard étant égal à $q_L/N$, où $q_L$ est l'intervalle de temps existant entre les impulsions du train généré, et
iii) recombinaison des N voies, donnant lieu à un train d'impulsions dont l'intervalle de temps entre impulsions successives, $q_o = q_L/N$, correspond à la fenêtre temporelle du débit désiré,

la stabilisation, par APH, du train ayant le débit désiré étant effectuée avant recombinaison, c'est-à-dire sur chacune des N voies séparément, et ce selon un protocole permettant d'obtenir, après recombinaison des N voies, une alternance de phases ou polarisations, respectivement.

Conformément à l'invention, le codage de chacune des N voies est effectué séparément avant recombinaison selon ledit protocole, en sorte que, après recombinaison des N voies en un train unique, on obtient un canal unique d'information.

Egalement conformément à l'invention, le codage des N voies est effectué avant recombinaison indépendamment sur chacune des N voies, chaque voie constituant ainsi un canal d'information indépendant, en sorte que, après recombinaison des N voies, les N canaux d'information sont entrelacés et permettent la transmission desdits canaux indépendants en configuration de multiplexage temporel, la réception du train d'impulsions ayant le débit d'impulsions désiré étant obtenue par une étape de détection à N canaux, la réception des N canaux de détection indépendants étant effectuée par démultiplexage temporel.

La présente invention a également pour objet un système de transmission optique à très longue distance d'au moins un train de solitons, comprenant :

- des moyens de génération d'au moins un train d'impulsions lumineuses, chaque impulsion étant émise à l'intérieur d'une fenêtre temporelle, les fenêtres temporelles successives étant contiguës et de même durée, les impulsions lumineuses étant en outre de même forme et de même amplitude, l'amplitude étant supérieure à un seuil nécessaire à l'obtention d'impulsions ayant un caractère solitonique lors de la propagation du train dans une fibre optique monomode ;
- des moyens de codage des impulsions lumineuses dudit train pour y introduire des informations à transmettre ;
- des moyens d'injection ou de couplage dudit train d'impulsions codées dans ladite fibre optique ;
- des moyens de propagation des impulsions lumineuses sous forme d'impulsions solitoniques, ces moyens de propagation étant constitués par ladite fibre optique monomode présentant à la longueur d'onde optique des impulsions un indice de réfraction non-linéaire et une dispersion anormale pour la vitesse de groupe d'impulsions lumineuses ;
- des moyens d'amplification optique des impulsions solitoniques au cours de leur propagation dans la fibre ;
- des moyens de réception et de décodage du train d'impulsions solitoniques,

caractérisé en ce qu'il comprend en outre des moyens de stabilisation de chaque soliton à l'intérieur de sa fenêtre temporelle, et donc de stabilisation dudit train de solitons, par introduction d'une interaction répulsive entre chaque soliton et les deux solitons adjacents immédiatement précédent et suivant, ces moyens de stabilisation étant constitués par au moins un modulateur de phase optique des solitons produisant une alternance de phases 0 et $\pi$ entre solitons successifs.

Selon une disposition préférée du mode de réalisation précité, lesdits moyens de codage comprennent au moins un modulateur de polarisation des solitons afin de préserver le caractère stabilisé dudit train de solitons, c'est-à-dire le caractère répulsif stabilisant des interactions entre solitons adjacents.

Conformément à l'invention, les moyens de réception dudit train de solitons comportent des moyens de discrimination entre la modulation produisant le codage des solitons et la modulation produisant la stabilisation des solitons.

Selon une modalité préférée de réalisation du système conforme à l'invention, lorsque les moyens de génération dudit train d'impulsions lumineuses génèrent un débit d'impulsions inférieur à un débit de transmission désiré, on porte la valeur du débit généré à la valeur du débit de transmission désiré à l'aide des moyens suivants :

i) des moyens séparateurs du train généré en N voies identiques, N > 1 étant un entier ;
ii) des moyens introduisant un retard relatif entre les N voies, ce retard étant égal à $q_L/N$, où $q_L$ est l'intervalle de temps existant entre les impulsions du train généré, et
iii) des moyens de recombinaison des N voies, donnant lieu à un train d'impulsions dont l'intervalle de temps entre impulsions successives, $q_o = q_L/N$, correspond à la fenêtre temporelle du débit désiré,

les moyens de stabilisation, par APH, du train ayant le débit désiré agissant avant les moyens de recombinaison, c'est-à-dire sur chacune des N voies séparément, et ce selon un protocole permettant d'obtenir, après recombinaison des N voies, une alternance de phases ou polarisations, respectivement.

Conformément à l'invention, les moyens de codage agissent avant recombinaison sur chacune des N voies séparément selon ledit protocole, en sorte que, après recombinaison des N voies en un train unique, ils donnent un canal unique d'information.

Egalement conformément à l'invention, les moyens de codage des N voies agissent avant recombinaison indépendamment sur chacune des N voies, chaque voie constituant ainsi un canal d'information indépendant, en sorte que lesdits moyens de recombinaison agissent en tant que multiplexeur des N canaux d'informations indépendants, les moyens de réception du train d'impulsions ayant le débit d'impulsions désiré comportant des dispositifs de détection à N canaux, un démultiplexeur effectuant la réception des N canaux de détection indépendants.

La présente invention a encore également pour objet un émetteur d'au moins un train de solitons, comprenant :

- des moyens de génération d'au moins un train d'impulsions lumineuses, chaque impulsion étant émise à l'intérieur d'une fenêtre temporelle, les fenêtres temporelles successives étant contiguës et de même durée, les impulsions lumineuses étant en outre de même forme et de même amplitude, l'amplitude étant supérieure à un seuil nécessaire à l'obtention d'impulsions ayant un caractère solitonique lors de la propagation du train dans une fibre optique monomode ;
- des moyens de codage des impulsions lumineuses dudit train pour y introduire des informations à transmettre ;
- des moyens d'injection ou de couplage dudit train d'impulsions codées dans ladite fibre optique ;

caractérisé en ce qu'il comprend en outre des moyens de stabilisation de chaque soliton à l'intérieur de sa fenêtre temporelle, et donc de stabilisation dudit train de solitons, par introduction d'une interaction répulsive entre chaque soliton et les deux solitons adjacents immédiatement précédent et suivant, ces moyens de stabilisation étant constitués par au moins un modulateur de phase optique des solitons produisant une alternance de phase 0 et $\pi$ entre solitons successifs.

Selon une disposition préférée du mode de réalisation de l'émetteur précité, lesdits moyens de codage comprennent au moins un modulateur de polarisation des solitons, afin de préserver le caractère stabilisé dudit train de solitons, c'est-à-dire le caractère répulsif stabilisant des interactions entre solitons adjacents.

Selon une modalité préférée de réalisation de l'émetteur conforme à l'invention, lorsque les moyens de génération dudit train d'impulsions lumineuses génèrent un débit d'impulsions inférieur à un débit de transmission désiré, on porte la valeur du débit généré à la valeur du débit de transmission désiré à l'aide des moyens suivants :

i) des moyens séparateurs du train généré en N voies identiques, N > 1 étant un entier ;
ii) des moyens introduisant un retard relatif entre les N voies, ce retard étant égal à $q_L/N$, où $q_L$ est l'intervalle de temps existant entre les impulsions du train généré, et
iii) des moyens de recombinaison des N voies, donnant lieu à un train d'impulsions dont l'intervalle de temps entre impulsions successives, $q_o = q_L/N$, correspond à la fenêtre temporelle du débit désiré,

les moyens de stabilisation, par APH, du train ayant le débit désiré agissant avant les moyens de recombinaison, c'est-à-dire sur chacune des N voies séparément, et ce selon un protocole permettant d'obtenir, après recombinaison des N voies, une alternance de phases ou polarisations, respectivement.

Conformément à l'invention, les moyens de codage agissent avant recombinaison sur chacune des N voies séparément selon ledit protocole, en sorte que, après recombinaison des N voies en un train unique, ils donnent un canal unique d'information.

Egalement conformément à l'invention, les moyens de codage des N voies agissent avant recombinaison indépendamment sur chacune des N voies, chaque voie constituant ainsi un canal d'information indépendant, en sorte que lesdits moyens de recombinaison agissent en tant que multiplexeur des N canaux d'informations indépendants, les moyens de réception du train d'impulsions ayant le débit d'impulsions désiré comportant des dispositifs de détection à N canaux, un démultiplexeur effectuant la réception des N canaux de détection indépendants.

La présente invention a en outre également pour objet un récepteur d'au moins un train de solitons, caractérisé en ce qu'il comporte des moyens de discrimination entre une modulation produisant le codage des solitons et une modulation produisant une stabilisation dudit train de solitons par introduction d'une interaction répulsive entre chaque soliton et les deux solitons adjacents immédiatement précédent et suivant, obtenue par modulation de phase optique des solitons produisant une alternance de phases 0 et $\pi$ entre solitons successifs, ledit train étant dit stabilisé par alternance de phase, APH, alors que le codage des solitons est obtenu par modulation de polarisation, lesdits moyens de discrimination étant constitués par un séparateur de polarisation.

Selon une modalité préférée de réalisation du récepteur conforme à l'invention, lorsque le récepteur reçoit un train ayant un débit de transmission des solitons supérieur à un débit de réception désiré, il comporte, d'une part, des moyens de réception comprenant des dispositifs de détection à N voies, N > 1 étant un entier et, d'autre part, un démultiplexeur effectuant la réception des N voies de détection indépendantes.

L'invention sera mieux comprise à l'aide du complément de description qui va suivre ainsi que des dessins annexés donnés à titre d'illustration non limitative ; dans ces dessins :

- la Fig. 1 illustre le schéma de principe d'une liaison optique par trains de solitons entre un émetteur et un récepteur, cette figure ayant été déjà décrite plus haut en rapport avec l'état de la technique ;
- la Fig. 2 est une représentation schématique de trains de solitons stabilisés conformément à l'invention par compensation de leurs interactions, en ce sens que la répulsion entre chaque soliton et les deux solitons adjacents stabilise leur distance relative ; le train de solitons est stabilisé par alternance de phase (APH), $\pi$ étant le retard de phase optique entre solitons successifs ;
- la Fig. 3 illustre schématiquement un train APH codé par modulation de polarisation ;
- la Fig. 4 illustre schématiquement la configuration générale d'un émetteur permettant de produire et coder un train de solitons stabilisés conformément à l'invention à partir d'un laser à blocage de modes générant un débit d'impulsions inférieur à un débit de transmission désiré

- la Fig. 5 illustre, également schématiquement, la réception des trains APH codés par modulation de polarisation et correspond à la Fig. 3.

Le procédé de transmission qui fait l'objet de cette invention repose sur l'exploitation des forces répulsives entre solitons lorsqu'ils sont en opposition de phase. La répulsion entre solitons voisins permet la réalisation de trains d'impulsions périodiques et robustes, avec un pas stable et présentant une immunité à la coalescence de solitons et à la gigue d'amplification.

Le procédé proposé présente deux améliorations par rapport aux transmissions par trains de solitons classiques :

(1) il a un débit supérieur, car il permet un rapprochement des solitons, typiquement d'un facteur de l'ordre de 3 par rapport aux séparations pratiquées dans les systèmes classiques,
(2) il a une portée rallongée, car la stabilisation répulsive des trains élimine la coalescence des solitons et réduit la gigue d'amplification. Ces deux phénomènes ne constituent donc plus des facteurs limitatifs de la transmission et la portée maximale des trains stabilisés sera limitée par d'autres phénomènes physiques, tels que la dispersion ou les non-linéarités d'ordre supérieur, dont l'importance n'est pas encore bien quantifiée.

En ce qui concerne le principe de la transmission par compensation des interactions entre solitons, il s'agit de rappeler d'abord que l'équation de Schroedinger non-linéaire, qui gouverne l'évolution du soliton dans la fibre optique, permet également la description des interactions qui ont lieu dans un train de plusieurs solitons. Toutefois, la résolution exacte de cette équation nécessite un formalisme mathématique lourd (la méthode de diffusion-inverse) ou bien des simulations numériques sur ordinateur. L'inconvénient de ces deux méthodes exactes est qu'elles ne se prêtent pas à des interprétations simples, qui puissent indiquer de manière intuitive des tendances simples. Par contre, dans le cas de la propagation de deux solitons bien séparés (lorsque leur séparation est q > 2LS), il existe des formules approximatives qui fournissent une description simple et relativement précise de ces interactions. Lorsque ces formules sont appliquées à des solitons très rapprochés, elles ne peuvent pas fournir des résultats quantitativement précis (pour q = 2, la disparité avec la solution exacte est déjà de quelques pour cent) mais fournissent des indications simples et qualitatives sur l'évolution des solitons. A cause de leur transparence, ces formules approximatives seront utilisées dans l'argumentation de cette proposition.

Lorsqu'on considère la propagation de deux solitons d'amplitude égale, leur interaction dépend de deux paramètres relatifs : leur séparation q et leur différence de phase $\phi$. Lors de leur interaction, les solitons évoluent en modifiant ces deux paramètres. Dans les cas spéciaux $\phi = 0$ et $\phi = \pi$, la différence de phase reste inchangée tout le long de la propagation de la paire, alors que l'interaction peut s'assimiler à une "force Newtonienne" entre les deux solitons qui produit une accélération $\ddot{q}$ (cf. la référence [5] :

[5]  J.P. Gordon,
     "Interaction forces among solitons in optical fibers",
     Optics Letters, vol. 8, 596-598 (1983)) :

$$(1) \quad \ddot{q} = -2e^{-1.76q}$$

pour $\phi = 0$ et

$$(2) \quad \ddot{q} = 2e^{-1.76q}$$

pour $\phi = \pi$. La "force" solitonique est donc attractive lorsque les solitons sont en phase et répulsive lorsqu'ils sont en opposition de phase et décroît exponentiellement avec la séparation entre les deux impulsions.

Lorsque les solitons ont des polarisations linéaires différentes, l'interaction répulsive entre deux solitons en opposition de phase varie en fonction de l'angle entre les deux polarisations. L'accélération correspondante s'écrit :

$$(3) \quad \ddot{q} = -4e^{-3.52q} + 2e^{-1.76q}\cos a$$

où $\cos a$ est le cosinus de l'angle $a$ entre les deux polarisations.

Quant à la constitution de trains de solitons stabilisés, l'analogie avec les forces Newtoniennes conventionnelles fournit une image simple des interactions complexes dans un train comportant un grand nombre de solitons. En utilisant le caractère additif bien connu des forces Newtoniennes, l'interaction totale dans un train de solitons peut être écrite comme une somme de forces binaires entre toutes les paires possibles de solitons. Cette analyse implique qu'un train infini de solitons équidistants et de même amplitude peut être stabilisé si ces forces sont compensées symétriquement au point d'équilibre de chaque soliton. Cette stabilisation se produit pour des trains de solitons de même polarisation, mais dont la phase optique alterne de $\pi$ entre solitons voisins, que l'on désignera par APH (trains stabilisés par alternance de phase, cf. la Fig. 2).

Dans ce cas, le train est stabilisé par les forces répulsives des solitons voisins, ce qui produit un équilibre stable. En effet, lorsque au cours de la propagation un soliton se rapproche d'un de ses voisins, la répulsion agit comme une force de rappel qui ramène le soliton à son point d'équilibre et maintient la distance moyenne entre solitons essentiellement constante. Par conséquent, dans un train APH, les impulsions effectuent généralement des oscillations de faible excursion autour de leurs points d'équilibre respectifs. L'amplitude de ces oscillations est d'autant plus faible que les solitons sont rapprochés, car la force de rappel est exponentielle en fonction du déplacement. Ceci implique que dans un train de solitons stabilisé par alternance de phase ou de polarisation, les effets de la gigue d'amplification sont très limités à cause de la force de rappel.

Un train qui comporterait des impulsions de même phase et de même polarisation serait stabilisé par des forces attractives entre solitons voisins (eq. 1). Toutefois, il s'agirait dans ce cas d'un équilibre instable. En effet, lorsque au cours de sa propagation un soliton se rapproche d'un de ses voisins (par exemple du soliton précédent) l'attraction avec ce voisin devient plus importante, alors que l'attraction avec l'autre voisin (c'est-à-dire le soliton suivant) devient plus faible : le soliton continuera donc à s'approcher du premier voisin (le soliton précédent) jusqu'à ce que les deux solitons coalescent, déclenchant ainsi une déstabilisation du train.

Des études récentes ont montré que les relations de phase et de polarisation entre solitons restent inchangées tout le long de la propagation malgré les fluctuations et les inhomogénéités des fibres, si les solitons ont une histoire commune (cf. la référence [1]). Ceci implique que les alternances des trains APH sont préservées au cours de la propagation. Par conséquent, la compensation des interactions entre solitons et l'immunité relative à la gigue, due à la force de rappel exponentielle des trains compacts, indique que les trains APH peuvent se propager sur des distances intercontinentales tout en maintenant constante la séparation entre solitons.

En ce qui concerne le codage des trains stabilisés de solitons, l'application du codage conventionnel OOK aux trains de solitons APH, introduirait des lacunes qui détruiraient la compensation des forces entre les solitons. Par conséquent, ce codage annulerait tous les avantages que présente un train stabilisé compact et rétablirait les limitations dues aux interactions et à la gigue, dont souffrent actuellement les communications par soliton.

Dans le cadre de la présente invention, on propose des méthodes de codage adaptées au train stabilisé. Le principe du codage adapté est fondé sur le maintien des forces répulsives entre proches voisins en tournant la polarisation d'un soliton d'un angle adéquat. Ceci préserve en grande partie l'équilibre des forces et, par conséquent, les trains codés peuvent se propager sur des distances intercontinentales, sans dégradation de l'information. On illustre ci-dessous, à titre d'exemple non limitatif, le principe de codage adapté en examinant brièvement la dynamique des trains codés en binaire. Toutefois, la description qui suit s'applique dans son principe non seulement au codage binaire mais aussi au codage à M > 2 valeurs discrètes ainsi qu'au codage à valeurs continues analogique.

Le codage binaire des trains APH peut s'effectuer par la rotation d'un angle adéquat (dont la valeur optimale est déterminée en fonction du débit et de la durée des solitons et de la portée de la transmission) de la polarisation des solitons correspondant au chiffre 1, alors que les solitons qui conservent leur polarisation d'origine correspondent au chiffre 0. Par exemple, lorsque la séquence binaire ...00100... est codée sur un train APH, la polarisation d'un soliton est tournée de 45°; la suite des solitons au voisinage du bit codé peut être représentée par

$$ (4) \qquad 0^{(-3)} \; \pi^{(-2)} \; 0^{(-1)} \; P^{(0)} \; 0^{(1)} \; \pi^{(2)} \; 0^{(3)} $$

où 0 et $\pi$ représentent des impulsions soliton de phase 0 et $\pi$ respectivement, P représente le soliton dont la polarisation est tournée, alors que les indices en exposant dénotent la position de chaque soliton en relation avec le bit codé.

La substitution des forces répulsives de type "phase" (eq. 2) par des interactions répulsives de type polarisation (eq. 3) lors du codage modifie l'équilibre des forces solitoniques. En particulier, pour une rotation de la polarisation de 45°, le point d'équilibre de l'impulsion en position 1 pourrait se déplacer à cause de cette substitution en moyenne de 0,17 LS. Pour une séparation initiale entre solitons de $q_o = 3$ LS ce déplacement peut paraître à la réception comme une imprécision de la position du soliton (gigue) de l'ordre de 6 % du temps-bit, indépendamment de la distance de transmission. Etant donné la portée relativement courte de la force solitonique, les seconds voisins ne sont pas perturbés sensiblement lors du codage : le déplacement de leur point d'équilibre est généralement inférieur à 1 % du temps-bit. La dynamique des trains codés avec des séquences plus longues repose sur les mêmes principes et donne des résultats similaires. Un exemple de codage sur un train APH d'une séquence plus longue, et donc plus complexe, notamment la séquence ...011010..., est représenté en Fig. 3, où la trame de base est constituée de solitons dont la phase alterne de $\pi$, alors que le codage est effectué en retournant de 45° la polarisation des deuxième, troisième et cinquième solitons illustrés à la Fig. 3.

Dans le cas de codage à M > 2 valeurs discrètes (0, 1, 2, ..., (M-1)), le codage de la m-ème valeur s'effectue par rotation de la polarisation de $[(m-1)/(M-1)]$. $a_{max}$ ($a_{max}$ étant un angle maximal adéquat), alors que pour le codage analogique toutes les valeurs de rotation de la polarisation entre 0 et $a_{max}$ sont permises.

Cette analyse indique que les trains APH conservent leur stabilité après codage et peuvent donc se propager sur de longues distances sans dégradation de l'information. Il va de soi que pour un train de longueur ou durée limitée les toutes premières et les toutes dernières impulsions ne sont pas bien stabilisées et ne doivent donc pas comporter de codage.

La mise en oeuvre du procédé de communications optiques par trains de solitons stabilisés peut être effectuée avec des composants d'optique intégrée (ou d'optique de volume) déjà existants, bien que le développement de matériel spécialisé pourrait optimiser certaines étapes. A titre d'exemple non-limitatif des possibilités de mise en oeuvre, on examine ci-dessous l'implémentation de ce procédé par des composants optoélectroniques généralement disponibles.

En ce qui concerne l'émission d'un train d'impulsions lumineuses comportant un très grand nombre d'impulsions équidistantes et dont la forme, l'amplitude et la phase sont sensiblement identiques, celui-ci peut être obtenu à la sortie d'un laser à blocage de modes. Il est bien connu que, pour lancer des solitons dans une fibre optique, il n'est pas nécessaire que les impulsions fournies par le laser aient un profil temporel en sécante hyperbolique comme la forme exacte du soliton fondamental. Des impulsions de forme voisine (telle que la forme Gaussienne produite habituellement par les lasers à blocage de modes) peuvent également être lancées dans la fibre : dans ce cas, si leur intensité dépasse un certain seuil, ces impulsions évoluent vers la forme en sécante hyperbolique du soliton fondamental au cours de leur propagation dans la fibre.

En général, l'espacement $q_L$, c'est-à-dire l'intervalle de temps existant entre les impulsions du train issu du laser à blocage de modes, est égal à plusieurs largeurs d'impulsion. Cet espacement peut être resserré d'un facteur N (N>1 étant un entier) par une procédure en trois étapes :

(1) séparation du train en N voies identiques,
(2) introduction d'un retard relatif de $q_L/N$ entre les N voies
(3) recombinaison des N voies,

cette procédure produisant un train d'impulsions espacées de $q_o = q_L/N$ entre elles, $q_o$ étant la fenêtre temporelle du débit d'impulsions désiré.

Il est possible de stabiliser ce train en APH, en modulant sur le train recombiné la phase d'impulsions alternées, à l'aide de modulateurs de phase électro-optiques. Il est préférable, toutefois, d'effectuer cette modulation de phase sur chacune des N voies séparément, selon un protocole qui permettrait d'obtenir, après recombinaison des N voies, une alternance de phase. Le cas le plus simple se produit lorsque N est un nombre pair.

Le codage d'informations binaires peut s'effectuer soit sur le train recombiné, soit sur chaque voie individuellement, avant recombinaison. Cette dernière possibilité présente plusieurs avantages :

(a) Elle combine les deux processus de modulation (stabilisation et codage) en un seul.
(b) Chaque voie peut être codée indépendamment des autres, à condition que le protocole des alternances nécessaires à la stabilisation soit respecté. Ceci donne la possibilité d'avoir, après recombinaison, la transmission de N canaux indépendants, multiplexés temporellement.
(c) Le codage de chaque voie individuelle est N fois plus lent que le débit de transmission, ce qui permet de l'adapter aux bandes passantes des composants électro-optiques disponibles.
(d) Lorsque l'espacement des solitons dans le train recombiné est de l'ordre de $q_o \leq 2LS$, les solitons voisins ont un recouvrement non-négligeable, ce qui rend difficile voire impossible la modulation de phase ou de polarisation d'un soliton en entier. Le codage d'un train N fois moins dense permet de maintenir l'intégrité des impulsions soliton lors de la modulation.

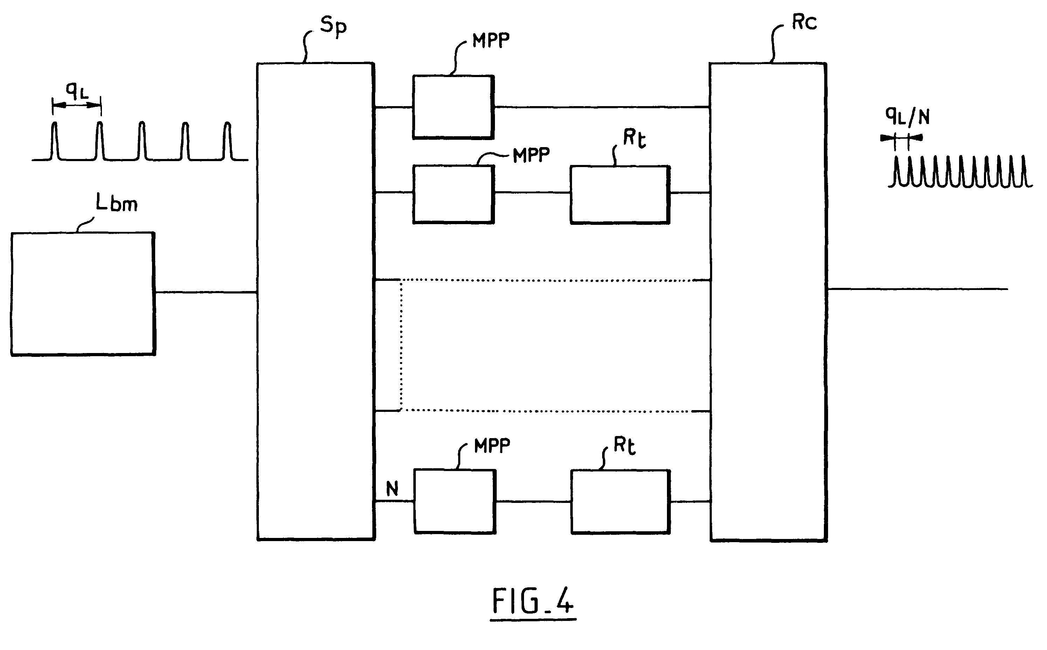

La Fig. 4 illustre schématiquement le cas général où un train d'impulsions lumineuses est émis par un laser à blocage de modes $L_{bm}$, avec un débit qui définit un espacement $q_L$ entre impulsions et qui est inférieur à un débit de transmission désiré, ce train étant séparé en N voies par un séparateur Sp. Sur chaque voie est effectuée la modulation de phase et la modulation de polarisation, exigées selon l'invention pour la stabilisation et le codage des impulsions ou vice versa, et ce à l'aide d'un élément unique MPP accomplissant simultanément les deux fonctions. Des dispositifs $R_t$ introduisent un retard relatif $q_L/N$ entre une voie et la voie précédente, en sorte que pour la n-ème voie ce retard est $(n-1)q_L/N$. Un recombinateur $R_c$ permet d'obtenir un train ayant le débit de transmission désiré, c'est-à-dire des impulsions espacées de $q_o = q_L/N$.

Pour comprendre mieux la constitution et le codage de trains de solitons stabilisés, on examine le cas N = 4, où l'intervalle temporel entre les impulsions fournies par le laser à blocage de modes $q_L$, est 4 fois plus long que l'intervalle entre solitons du train obtenu à la sortie du module d'émission. Tous les éléments matériels mentionnés dans la discussion qui suit sont bien connus par les scientifiques et les techniciens travaillant dans le domaine et leur fonctionnement ne sera pas explicité.

Le train issu du laser à blocage de modes est séparé en quatre voies - indiquées ci-après $V_1$, $V_2$, $V_3$, $V_4$ - à l'aide, par exemple, d'un "coupleur en étoile", utilisé couramment dans la connectique des fibres. Chaque voie comporte un modulateur de phase, un modulateur de polarisation et une ligne à retard optique. Les deux modulateurs peuvent être distincts ou constituer un seul élément qui accomplit les deux fonctions simultanément. La ligne à retard de chaque voie doit être fixée à la valeur de retard requise : Pour la voie $V_1$ le retard $R_1$ peut être nul ($R_1 = 0$), pour $V_2$ le retard est fixé à $R_2 = q_L/4$, pour $V_3$ le retard est de $R_3 = q_L/2$, alors que pour $V_4$, $R_4 = 3q_L/4$. Chaque ligne à retard peut être formée, par exemple, d'une fibre optique de longueur adéquate ; pour la voie i la longueur $L_i$ est donné par $L_i = vR_i$ où v est la vitesse de groupe des impulsions. Après introduction du retard, lorsque les quatre voies sont recombinées à l'aide d'un deuxième "coupleur en étoile" un train unique d'impulsions de densité quatre fois plus importante sera constitué.

Pour constituer un train APH, les modulateurs de phase des voies $V_2$ et $V_4$ doivent retarder de $\pi$ la phase de toute impulsion qui les traverse, alors que dans les voies $V_1$ et $V_3$ la phase des impulsions doit rester inchangée. Lorsqu'une série d'informations binaires ("bits") doit être codée sur le train APH, la série est découpée en séquences consécutives de 4 bits indiquées ci-après ($B_1$, $B_2$, $B_3$, $B_4$, $B_1$, $B_2$, ...). Dans chaque séquence, le premier bit $B_1$ est codé par le modulateur de polarisation de la voie $V_1$, le deuxième bit $B_2$ par le modulateur de la voie $V_2$, le troisième $B_3$ par la voie $V_3$, alors que $B_4$ est codé par le modulateur de $V_4$, et ainsi de suite pour les séquences suivantes. Après recombinaison des quatre voies par le deuxième "coupleur en étoile" le train stabilisé en APH et codé en modulation de polarisation peut être transmis par le système de fibre monomode jusqu'au récepteur.

La réception des trains APH codés peut s'effectuer avec un matériel similaire à celui utilisé pour la réception de solitons multiplexés en polarisation (cf. la référence [1]), à savoir, d'au moins un contrôleur de polarisation (qui compense les retournements aléatoires de la polarisation du train) suivi chacun d'un élément polarisant qui sépare le train initial en deux trains de polarisations orthogonales, suivi à son tour chacun du dispositif de détection. Un des deux trains issus de chaque élément polarisant est introduit dans le dispositif de détection. Le deuxième train peut être introduit dans un deuxième dispositif de détection pour être utilisé, par exemple, à des fins de contrôle de polarisation ou bien il peut être rejeté car il porte essentiellement les mêmes informations que le premier train.

La séparation des deux polarisations convertit la modulation de polarisation du train d'impulsions initial en modulation d'amplitude sur chacun des deux trains en sortie et discrimine (néglige en première approximation) la modulation de phase qui stabilise le train initial. L'orientation du séparateur de polarisation peut être choisie selon les critères, d'une part, de maximisation du rapport signal à bruit du train détecté et, d'autre part, l'optimisation du fonctionnement du contrôleur de polarisation ainsi que des autres éléments du module de réception. A titre d'exemple non limitatif, nous décrirons le fonctionnement du module de réception lorsque les deux axes de l'élément polarisant sont choisis respectivement, orthogonal et parallèle à la polarisation des impulsions correspondant au chiffre binaire 0. Dans ce cas, les deux voies issues du polariseur consistent chacune en un train d'impulsions comportant la même série de bits codés en modulation d'amplitude mais de manière complémentaire : sur le premier train (dont la polarisation est orthogonale à celle des impulsions correspondant au chiffre 0) la présence d'une impulsion correspond au chiffre binaire 1 alors qu'une lacune dans la trame correspond au chiffre 0, comme dans le codage OOK classique ; sur le second train (dont la polarisation est parallèle à celle des impulsions correspondant au chiffre 0) le chiffre 0 correspond à une impulsion d'intensité I alors que, pour le cas du codage effectué par une rotation de polarisation de 45°, le chiffre binaire 1 correspond à une impulsion d'intensité I/2. La figure 5 représente le signal reçu en séparant selon deux polarisations (orthogonale et parallèle à la polarisation des impulsions correspondant au chiffre 0) lors de la réception de la séquence ...011010... portée par le train mentionné en rapport avec la figure 3.

Le dispositif de détection de ces trains peut être basé sur le principe dit "de détection directe" qui consiste essentiellement en la mesure de l'intensité lumineuse arrivant sur le détecteur durant chaque temps-bit. Ceci peut être accompli à l'aide d'un photodétecteur tel qu'une photodiode dont la courbe de sensibilité inclut la longueur d'onde optique des solitons.

Il faut noter que lors de la réception de trains APH, les trains issus de l'élément polarisant sont également modulés en phase, la phase de chaque impulsion étant 0 ou $\pi$ selon sa position dans le train. Cette modulation provient de la trame de stabilisation du train APH, alors que le codage des bits dans le train correspond à une modulation d'amplitude. La modulation de phase optique de ces impulsions permet l'utilisation d'un deuxième type de détecteur, au lieu du photodétecteur mentionné ci-dessus. Ce deuxième type peut être un détecteur homodyne équilibré, dont l'oscillateur local consiste en un train APH de périodicité $q_L/N$ (identique à celle du train APH reçu) et dont la trame est synchronisée avec celle du train reçu. Dans cette configuration, le détecteur homodyne équilibré agit comme une "porte logique ET" produisant un signal électrique non-nul lorsqu'une impulsion du train codé arrive sur le détecteur et un signal électrique nul lorsqu'une lacune du train codé est détectée.

On examine par la suite le cas de dispositifs de détection à plusieurs voies de sortie, chaque voie de sortie comportant un élément détecteur distinct. A titre d'illustration, on examine le cas où le nombre total de voies est 4 ($V_1$, $V_2$, $V_3$, $V_4$), en correspondance avec les quatre voies de l'illustration du module d'émission. Les quatre voies du dispositif de détection peuvent être constituées soit par l'utilisation d'un "coupleur en étoile" à 4 ports de sortie, sur une des deux sorties de l'élément polarisant, soit par l'utilisation d'un "coupleur en Y" à deux ports de sortie sur chacune des deux sorties de l'élément polarisant.

Chacune des quatre voies comporte un élément détecteur adéquat. Comme pour la réception à une voie un détecteur homodyne équilibré convient aussi pour la réception de trains APH. Toutefois, pour la réception à 4 voies, l'oscillateur local doit consister en un train d'impulsions cohérentes et d'espacement $q_L$, c'est-à-dire 4 fois plus large que l'espacement des trains reçus. Les impulsions de l'oscillateur local peuvent être synchronisées avec les impulsions du train reçu, de la manière suivante :

Dans la voie $V_1$, les impulsions de l'oscillateur local sont synchronisées avec les impulsions du train reçu portant l'information du bit $B_1$, définit à l'émission. Le détecteur homodyne équilibré fonctionne alors comme une "porte logique ET", donnant un signal électrique qui peut être non-nul pour le bit $B_1$, et un signal électrique nul pour tous les autres bits.

Pour la réception de trains APH, le signal électrique peut correspondre à la tension E (ou -E) lorsqu'une impulsion est détectée et à la tension nulle lorsqu'une lacune dans la trame est détectée.

Dans la voie $V_2$, la synchronisation de l'oscillateur local se fait avec le bit $B_2$, et ce bit est donc sélectionné lors de la détection. Le même raisonnement tient également pour les voies $V_3$ et $V_4$.

Comme pour l'émission, la détection a plusieurs voies présente l'avantage d'être N fois plus lente que le débit de transmission, permettant ainsi d'adapter la détection aux bandes passantes des composants optoélectroniques disponibles. Elle permet également de démultiplexer par des moyens optiques la transmission de N canaux indépendants multiplexés temporellement lors de l'émission.

**Revendications**

1. Procédé de transmission optique à très longue distance d'au moins un train de solitons, comprenant les étapes suivantes :

   - génération (E) d'au moins un train d'impulsions lumineuses, chaque impulsion étant émise à l'intérieur d'une fenêtre temporelle, les fenêtres temporelles successives étant contiguës et de même durée, les impulsions lumineuses étant en outre de même forme et de même amplitude, l'amplitude étant supérieure à un seuil nécessaire à l'obtention d'impulsions ayant un caractère solitonique lors de la propagation du train dans une fibre optique monomode ;
   - codage des impulsions lumineuses dudit train pour y introduire des informations à transmettre ;
   - injection ou couplage dudit train d'impulsions lumineuses codées dans ladite fibre optique ;
   - propagation (Tf) dudit train d'impulsions codées dans ladite fibre optique monomode sous forme d'impulsions solitoniques, la fibre optique monomode présentant à la longueur d'onde optique des impulsions un indice de réfraction non-linéaire et une dispersion anormale pour la vitesse de groupe des impulsions lumineuses ;
   - amplification optique (AO) des impulsions solitoniques au cours de leur propagation dans la fibre ;
   - réception et décodage (R) dudit train d'impulsions solitoniques,

   caractérisé en ce qu'il comporte également, après l'étape de génération, une étape de stabilisation de chaque soliton à l'intérieur de sa fenêtre temporelle, et donc de stabilisation dudit train de solitons, par introduction d'une interaction répulsive entre chaque soliton et les deux solitons adjacents immédiatement précédent et suivant, ladite interaction répulsive étant obtenue par modulation de phase optique (MPP) des solitons produisant une alternance de phase 0 et $\pi$ entre solitons successifs.

2. Procédé selon la revendication 1, caractérisé en ce que ledit codage est effectué par modulation de polarisation des solitons, afin de préserver le caractère stabilisé du train de solitons, c'est-à-dire le caractère répulsif stabilisant des interactions entre solitons adjacents.

3. Procédé selon la revendication 2, caractérisé en ce que ledit codage est choisi parmi le groupe comprenant le codage binaire avec deux valeurs de modulation, le codage discret à M valeurs de modulation, avec M > 2, ou le codage analogique avec une continuité de valeurs de modulation.

4. Procédé selon l'une des revendications 2 et 3, caractérisé en ce que la réception dudit train de solitons comporte une étape de discrimination entre la modulation produisant le codage des solitons et la modulation produisant la stabilisation des solitons.

5. Procédé selon l'une des revendications 2 à 4, caractérisé en ce que, lorsque la génération dudit train d'impulsions lumineuses génère un débit d'impulsions inférieur à un débit de transmission désiré, on porte la valeur du débit généré à la valeur du débit de transmission désiré par les étapes suivantes :

   i) séparation du train généré en N voies identiques, N >1 étant un entier ;
   ii) introduction d'un retard relatif entre les N voies, ce retard étant égal à $q_L/N$, où $q_L$ est l'intervalle de temps existant entre les impulsions du train généré, et
   iii) recombinaison des N voies, donnant lieu à un train d'impulsions dont l'intervalle de temps entre impulsions successives, $q_o = q_L/N$, cor-

respond à la fenêtre temporelle du débit désiré,

la stabilisation, par APH, du train ayant le débit désiré, étant effectuée avant recombinaison, c'est-à-dire sur chacun des N voies séparément, et ce selon un protocole permettant d'obtenir, après recombinaison des N voies, une alternance de phases ou polarisations, respectivement.

6. Procédé selon la revendication 5, caractérisé en ce que le codage de chacune des N voies est effectué séparément avant recombinaison selon ledit protocole, en sorte que, après recombinaison des N voies en un train unique, on obtient un canal unique d'information.

7. Procédé selon la revendication 5, caractérisé en ce que le codage des N voies est effectué avant recombinaison indépendamment sur chacune des N voies, chaque voie constituant ainsi un canal d'information indépendant, en sorte que, après recombinaison des N voies, les N canaux d'information sont entrelacés et permettent la transmission desdits canaux indépendants en configuration de multiplexage temporel, la réception du train d'impulsions ayant le débit d'impulsions désiré étant obtenue par une étape de détection à N canaux, la réception des N canaux de détection indépendants étant effectuée par démultiplexage temporel.

8. Système de transmission optique à très longue distance d'au moins un train de solitons, comprenant :

- des moyens de génération (E) d'au moins un train d'impulsions lumineuses, chaque impulsion étant émise à l'intérieur d'une fenêtre temporelle, les fenêtres temporelles successives étant contiguës et de même durée, les impulsions lumineuses étant en outre de même forme et de même amplitude, l'amplitude étant supérieure à un seuil nécessaire à l'obtention d'impulsions ayant un caractère solitonique lors de la propagation du train dans une fibre optique monomode ;
- des moyens de codage des impulsions lumineuses dudit train pour y introduire des informations à transmettre ;
- des moyens d'injection ou de couplage dudit train d'impulsions codées dans ladite fibre optique ;
- des moyens (Tf) de propagation des impulsions lumineuses sous forme d'impulsions solitoniques, ces moyens de propagation étant constitués par ladite fibre optique monomode présentant à la longueur d'onde optique des impulsions un indice de réfraction non-linéaire et une dispersion anormale pour la vitesse de groupe d'impulsions lumineuses ;

- des moyens d'amplification optique (AO) des impulsions solitoniques au cours de leur propagation dans la fibre ;
- des moyens (R) de réception et de décodage du train d'impulsions solitoniques,

caractérisée en ce qu'il comprend en outre des moyens de stabilisation de chaque soliton à l'intérieur de sa fenêtre temporelle, et donc de stabilisation dudit train de solitons, par introduction d'une interaction répulsive entre chaque soliton et les deux solitons adjacents immédiatement précédent et suivant, ces moyens de stabilisation étant constitués par au moins un modulateur de phase optique (MPP) des solitons produisant une alternance de phases 0 et $\pi$ entre solitons successifs.

9. Système selon la revendication 8, caractérisé en ce que lesdits moyens de codage comprennent au moins un modulateur de polarisation des solitons (MPP) afin de préserver le caractère stabilisé dudit train de solitons, c'est-à-dire le caractère répulsif stabilisant des interactions entre solitons adjacents.

10. Système selon la revendication 9, caractérisé en ce que les moyens de réception (R) dudit train de solitons comportent des moyens de discrimination entre la modulation produisant le codage des solitons et la modulation produisant la stabilisation des solitons.

11. Système selon l'une des revendications 9 et 10, caractérisé en ce que, lorsque les moyens de génération dudit train d'impulsions lumineuses génèrent un débit d'impulsions inférieur à un débit de transmission désiré, on porte la valeur du débit généré à la valeur du débit de transmission désiré à l'aide des moyens suivants :

i) des moyens séparateurs (Sp) du train généré en N voies identiques, N > 1 étant un entier ;
ii) des moyens (Rt) introduisant un retard relatif entre les N voies, ce retard étant égal à $q_L/N$, où $q_L$ est l'intervalle de temps existant entre les impulsions du train généré, et
iii) des moyens (Rc) de recombinaison des N voies, donnant lieu à un train d'impulsions dont l'intervalle de temps entre impulsions successives, $q_o = q_L/N$, correspond à la fenêtre temporelle du débit désiré,

les moyens de stabilisation, par APH, du train ayant le débit désiré agissant avant les moyens de recombinaison, c'est-à-dire sur chacune des N voies séparément, et ce selon un protocole permettant d'obtenir, après recombinaison des N voies, une alternance de phases ou polarisations, respectivement.

**12.** Système selon la revendication 11, caractérisé en ce que les moyens de codage agissent avant recombinaison sur chacune des N voies séparément selon ledit protocole, en sorte que, après recombinaison des N voies en un train unique, ils donnent un canal unique d'information.

**13.** Système selon la revendication 11, caractérisé en ce que les moyens de codage des N voies agissent avant recombinaison indépendamment sur chacune des N voies, chaque voie constituant ainsi un canal d'information indépendant, en sorte que lesdits moyens de recombinaison agissent en tant que multiplexeur des N canaux d'informations indépendants, les moyens de réception du train d'impulsions ayant le débit d'impulsions désiré comportant des dispositifs de détection à N canaux, un démultiplexeur effectuant la réception des N canaux de détection indépendants.

**14.** Emetteur (E) d'au moins un train de solitons, comprenant :

- des moyens de génération d'au moins un train d'impulsions lumineuses, chaque impulsion étant émise à l'intérieur d'une fenêtre temporelle, les fenêtres temporelles successives étant contiguës et de même durée, les impulsions lumineuses étant en outre de même forme et de même amplitude, l'amplitude étant supérieure à un seuil nécessaire à l'obtention d'impulsions ayant un caractère solitonique lors de la propagation du train dans une fibre optique monomode ;
- des moyens de codage des impulsions lumineuses dudit train pour y introduire des informations à transmettre ;
- des moyens d'injection ou de couplage dudit train d'impulsions codées dans ladite fibre optique ;

caractérisé en ce qu'il comprend en outre des moyens de stabilisation de chaque soliton à l'intérieur de sa fenêtre temporelle, et donc de stabilisation dudit train de solitons, par introduction d'une interaction répulsive entre chaque soliton et les deux solitons adjacents immédiatement précédent et suivant, ces moyens de stabilisation étant constitués par au moins un modulateur de phase optique des solitons produisant une alternance de phase 0 et $\pi$ entre solitons successifs.

**15.** Emetteur (E) selon la revendication 14, caractérisé en ce que lesdits moyens de codage comprennent au moins un modulateur de polarisation des solitons, afin de préserver le caractère stabilisé dudit train de solitons, c'est-à-dire le caractère répulsif stabilisant des interactions entre solitons adjacents.

**16.** Emetteur (E) selon la revendication 15, caractérisé en ce que, lorsque les moyens de génération dudit train d'impulsions lumineuses génèrent un débit d'impulsions inférieur à un débit de transmission désiré, on porte la valeur du débit généré à la valeur du débit de transmission désiré à l'aide des moyens suivants :

i) des moyens séparateurs (Sp) du train généré en N voies identiques, N > 1 étant un entier ;
ii) des moyens (Rt) introduisant un retard relatif entre les N voies, ce retard étant égal à $q_L/N$, où $q_L$ est l'intervalle de temps existant entre les impulsions du train généré, et
iii) des moyens (Rc) de recombinaison des N voies, donnant lieu à un train d'impulsions dont l'intervalle de temps entre impulsions successives, $q_o = q_L/N$, correspond à la fenêtre temporelle du débit désiré,

les moyens de stabilisation, par APH, du train ayant le débit désiré agissant avant les moyens de recombinaison, c'est-à-dire sur chacune des N voies séparément, et ce selon un protocole permettant d'obtenir, après recombinaison des N voies, une alternance de phases ou polarisations, respectivement.

**17.** Emetteur (E) selon la revendication 16, caractérisé en ce que les moyens de codage agissent avant recombinaison sur chacune des N voies séparément selon ledit protocole, en sorte que, après recombinaison des N voies en un train unique, ils donnent un canal unique d'information.

**18.** Emetteur (E) selon la revendication 16, caractérisé en ce que les moyens de codage des N voies agissent avant recombinaison indépendamment sur chacune des N voies, chaque voie constituant ainsi un canal d'information indépendant, en sorte que lesdits moyens de recombinaison agissent en tant que multiplexeur des N canaux d'informations indépendants, les moyens de réception du train d'impulsions ayant le débit d'impulsions désiré comportant des dispositifs de détection à N canaux, un démultiplexeur effectuant la réception des N canaux de détection indépendants.

**19.** Récepteur (R) d'au moins un train de solitons, caractérisé en ce qu'il comporte des moyens de discrimination entre une modulation produisant le codage des solitons et une modulation produisant une stabilisation dudit train de solitons par introduction d'une interaction répulsive entre chaque soliton et les deux solitons adjacents immédiatement précédent et suivant, obtenue par modulation de phase optique des solitons produisant une alternance de phases 0 et $\pi$ entre solitons successifs, ledit train étant dit stabilisé par alternance de phase, APH, alors que le codage des solitons est obtenu par modulation de polarisation, lesdits moyens de discrimination étant constitués par un séparateur de polarisation.

20. Récepteur (R) selon la revendication 19, caractérisé en ce que, lorsqu'il reçoit un train ayant un débit de transmission des solitons supérieur à un débit de réception désiré, il comporte, d'une part, des moyens de réception comprenant des dispositifs de détection à N voies, N > 1 étant un entier et, d'autre part, un démultiplexeur effectuant la réception des N voies de détection indépendantes.

**Claims**

1. Optical transmission process for sending at least one stream of solitons over very long distances, comprising the following steps:

   - generating (E) at least one stream of light pulses in which each pulse is sent inside a time window, consecutive time windows being contiguous and of the same duration, the light pulses having the same shape and the same amplitude which is greater than a threshold required to obtain soliton pulses when the stream propagates in a monomode optical fibre;
   - coding the light pulses of said stream to introduce thereinto data to be transmitted;
   - injecting or coupling said stream of coded light pulses into said optical fibre;
   - propagating (Tf) said stream of coded pulses in said monomode optical fibre in the form of soliton pulses, the monomode optical fibre having at the optical wavelength of the pulses a non-linear refractive index and an anomalous group velocity dispersion;
   - amplifying the soliton pulses optically (AO) as they propagate in the fibre;
   - receiving and decoding (R) said stream of soliton pulses;

   characterised in that it further includes, after the generation step, a step of stabilising each soliton inside its time window and thereby stabilising said stream of solitons by introducing a repulsive interaction between each soliton and the immediately preceding and following solitons, said repulsive interaction being obtained by optical phase modulation (MPP) of the solitons to produce an alternation of 0 and $\pi$ relative phases between consecutive solitons.

2. Process according to claim 1 characterised in that said coding is effected by polarisation modulation of the solitons to preserve the stabilised nature of the stream of solitons, i.e. the repulsive nature of stabilising interaction between adjacent solitons.

3. Process according to claim 2 characterised in that said coding is selected from the group comprising binary coding with two modulation values, discrete coding with M modulation values where M is greater than 2 and analogue coding with continuous modulation values.

4. Process according to claim 2 or claim 3 characterised in that reception of said stream of solitons comprises a step of discriminating between modulation which codes the solitons and modulation which stabilises the solitons.

5. Process according to any one of claims 2 to 4 characterised in that if generation of said stream of light pulses produces a pulse bit rate less than a required transmission bit rate the value of the generated bit rate is increased to the required transmission bit rate by the following steps:

   i) splitting the generated stream between N identical channels where N is an integer greater than 1;
   ii) introducing a relative time-delay between the N channels equal to $q_L/N$ where $q_L$ is the time Interval between the pulses of the generated stream, and
   iii) recombining the N channels to produce a series of pulses in which the time interval $q_o = q_L/N$ between consecutive pulses is equal to the time window of the required bit rate,

   stabilisation by alternation of phase of the stream awing the required bit rate being effected before recombination, i.e. on each of the channels separately, using a protocol producing alternating phases or polarisations, respectively, after recombination of the N channels.

6. Process according to claim 5 characterised in that the coding of each of the N channels is effected separately before recombination according to said protocol so that after the N channels are recombined into a single stream they constitute a single data channel.

7. Process according to claim 5 characterised in that the coding of the N channels is effected before recombination independently on each of the N channels which thereby constitutes an independent data channel so that after recombination of the N channels the N data channels are interleaved and enable transmission of said independent channels in a time-division multiplexing configuration, reception of the stream of pulses at the required pulse bit rate being achieved by a step of detection on N channels, reception of the N channels detected independently being effected by time-division demultiplexing.

8. Optical transmission system for sending at least one stream of solitons over a very long distance, said system comprising:

- means (E) for generating at least one stream of light pulses in which each pulse is sent inside a time-window, consecutive time windows being contiguous and of the same duration, the light pulses having the same shape and the same amplitude which is greater than a threshold required to obtain soliton pulses when the stream propagates in a monomode optical fibre;
- means for coding the light pulses of said stream to introduce thereinto data to be transmitted;
- means for injecting or coupling said stream of coded pulses into said optical fibre;
- means (Tf) for propagating the light pulses in the form of soliton pulses, said propagation means comprising said monomode optical fibre which has at the optical wavelength of the pulses a non-linear refractive index and an anomalous group velocity dispersion;
- optical amplification means (AO) for amplifying the soliton pulses as they propagate in the fibre;
- means (R) for receiving and decoding the stream of soliton pulses;

characterised in that it further includes means for stabilising each soliton in its time window and thereby stabilising said stream of solitons by introducing repulsive interaction between each soliton and the immediately preceding and following solitons, said means for stabilising comprising at least one optical phase modulator (MPP) which modulates the solitons to produce an alternation of 0 and $\pi$ relative phases between consecutive solitons.

9. System according to claim 8 characterised in that said coding means comprise at least one soliton polarisation modulator (MPP) to preserve the stabilised nature of said stream of solitons, i.e. the repulsive nature of the stabilising interaction between adjacent solitons.

10. System according to claim 9 characterised in that the means (R) for receiving said stream of solitons comprise means for discriminating between the modulation coding the solitons and the modulation stabilising the solitons.

11. System according to claim 9 or claim 10 characterised in that if the means for generating said stream of light pulses produce a pulse bit rate less than a required transmission bit rate the generated bit rate is increased no the required transmission bit rate by means of:

i) means (Sp) for splitting the generated stream between N identical channels where N is an integer greater than 1;
ii) means (Rt) for introducing a relative time-delay between the N channels equal to $q_L/N$ where $q_L$ is the time interval between the pulses of the generated stream, and
iii) means (Rc) for recombining the N channels to produce a stream of pulses in which the time interval $q_o = q_L/N$ between consecutive pulses is equal to the time window of the required bit rate,

the means for stabilising the stream at the required bit rate by APH operating before the recombining means, i.e. on each of the N channels separately, using a protocol producing alternating phases or polarisations, respectively, after recombination of the N channels.

12. System according to claim 11 characterised in that the coding means operate before recombination on each of the N channels separately according to said protocol so that after the N channels are recombined into a single stream they constitute a single data channel.

13. System according to claim 11 characterised in that the means for coding the N channels operate before recombination independently on each of the N channels which thereby constitutes an independent channel so that said recombination means serve to multiplex the N independent data channels, the means for receiving the stream of pulses at the required pulse bit rate comprising N-channel detector devices, a demultiplexer receiving the N independent data channels.

14. Sender (E) for sending at least one stream of solitons comprising:

- means for generating at least one stream of light pulses in which each pulse is sent inside a time window, consecutive time windows being contiguous and of the same ration, the light pulses having the same shape and the same amplitude which is greater than a threshold required to obtain soliton pulses when the stream propagates in a monomode optical fibre;
- means for coding the light pulses of said stream to introduce thereinto data to be transmitted;
- means for injecting or coupling said stream of coded light pulses into said optical fibre,

characterised in that it further includes means for stabilising each soliton inside its time window and thereby stabilising said stream of solitons by introducing repulsive interaction between each soliton and the immediately preceding and following solitons, said means for stabilising comprising at least one soliton optical phase modulator producing an alternation of 0 and $\pi$ relative phases between consecutive solitons.

15. Sender (E) according to claim 14 characterised in that said coding means comprise at least one soliton polarisation modulator to preserve the stabilised nature of said stream of solitons, i.e. the repulsive nature of the stabilising interaction between adjacent solitons.

16. Sender (E) according to claim 15 characterised in that if the means for generating said stream of light pulses produce a pulse bit rate less than a required transmission bit rate the generated bit rate is increased to the required transmission bit rate by means of:

i) means (Sp) for splitting the generated stream between N identical channels where N is an integer greater than 1;
ii) means (Rt) for introducing a relative time-delay between the N channels equal to $q_L/N$ where $q_L$ is the time interval between the pulses of the generated stream, and
iii) means (Rc) for recombining the N channels producing a stream of pulses in which the time interval $q_o = q_L/N$ between consecutive pulses is equal to the time window of the required bit rate,

the means for stabilising the stream at the required bit rate by APH operating before the recombining means, i.e. on each of the N channels separately, using a protocol producing alternating phases or polarisations, respectively, after recombination of the N channels.

17. Sender (E) according to claim 16 characterised in that the coding means operate before recombination on each of the N channels separately according to said protocol so that after the N channels are recombined into a single stream they constitute a single data channel.

18. Sender (E) according to claim 16 characterised in that the means for coding the N channels operate before recombination independently on each of the N channels which thereby constitutes an independent data channel so that said recombination means serve to multiplex the N independent data channels, the means for receiving the stream of pulses at the required pulse bit rate comprising N-channel detector devices, a demultiplexer receiving the N independently detected channels.

19. Receiver (R) for receiving at least one stream of solitons comprising means for discriminating between modulation coding solitons and modulation stabilising said stream of solitons by introducing repulsive interaction between each soliton and the immediately preceding and following solitons, obtained by optical phase modulation of the solitons to produce an alternation of 0 and $\pi$ relative phases between consecutive solitons, said stream being said to be stabilised by alternation of phase APH while the solitons are coded by polarisation modulation, said discrimination means comprising a polarisation separator.

20. Receiver (R) according to claim 19 characterised in that if it receives a stream having a soliton transmission bit rate greater than a required reception bit rate it comprises N-channel detector devices where N is an integer greater than 1 and a demultiplexer for receiving N independently detected channels.

**Patentansprüche**

1. Verfahren zum optischen Übertragen von wenigstens einem Solitonenzug über sehr lange Distanz, welches folgende Schritte umfaßt:

- Erzeugung (E) wenigstens eines Zuges an Lichtpulsen, wobei jeder Puls in das Innere eines Zeitfensters ausgesendet wird, die aufeinanderfolgenden Zeitfenster benachbart und von gleicher Dauer sind, die Lichtpulse außerdem von gleicher Form und gleicher Amplitude sind, die Amplitude größer als ein Schwellwert ist, der zum Erhalt von Pulsen mit einer Solitoneneigenschaft während der Ausbreitung des Zuges in einer Einwellen-Lichtfaser erforderlich ist;
- Kodierung der Lichtpulse des Zuges, um darin zu übertragende Informationen einzubringen;
- Einbringen oder Koppeln des Zuges codierter Lichtpulse in die Lichtfaser;
- Ausbreitung (Tf) des Zuges codierter Pulse in der Einwellen-Lichtfaser in Form von Solitonenpulsen, wobei die Einwellen-Lichtfaser über die Lichtwellenlänge der Pulse einen nichtlinearen Brechungsindex und eine anormale Dispersion für die Gruppengeschwindigkeit der Lichtpulse aufweist;
- optische Verstärkung (AO) der solitonenpulse während ihrer Ausbreitung in der Faser;
- Empfang und Decodierung (R) des Zuges an Solitonenpulsen;

dadurch gekennzeichnet, daß es nach dem Erzeugungsschritt, ebenfalls einen Schritt für die Stabilisierung jedes Solitons im Inneren seines Zeitfensters umfaßt, und damit eine Stabilisierung des Solitonenzuges, durch Einführung einer repulsiven Wechselwirkung zwischen jedem Soliton und den beiden benachbarten Solitonen, das unmittelbar Vorhergehende und das unmittelbar Nachfolgende, wobei die repulsive Wechselwirkung durch Modulation der optischen Phase (MPP) der Solitonen erhalten wird, die eine Alternierung der Phase 0 und $\pi$ zwischen aufeinanderfolgenden Solitonen erzeugt.

2. Verfahren nach Anspruch 1, dadurch gekennzeichnet, daß die Codierung durch Modulation der Polarisation der Solitonen durchgeführt wird, um die stabilisierte Eigenschaft des Solitonenzuges zu erhalten, d.h. die repulsive Eigenschaft, welche die Wechselwirkungen zwischen benachbarten Solitonen stabilisiert.

3. Verfahren nach Anspruch 2, dadurch gekennzeichnet, daß die Codierung aus der Gruppe ausgewählt wird, welche die binäre Codierung mit zwei Modulationswerten, die diskrete Codierung mit M Modulationswerten, wobei M > 2 ist, oder die kontinuierliche Codierung mit kontinuierlichen Modulationswerten umfaßt.

4. Verfahren nach einem der Ansprüche 2 und 3, dadurch gekennzeichnet, daß der Empfang des Solitonenzuges einen Schritt zur Diskrimination zwischen der die Codierung der Solitonen erzeugenden Modulation und der die Stabilisierung der Solitonen erzeugenden Modulation umfaßt.

5. Verfahren nach einem der Ansprüche 2 bis 4, dadurch gekennzeichnet, daß der Wert der erzeugten Rate, wenn die Erzeugung des Zuges an Lichtpulsen eine Pulsrate kleiner als eine gewünschte Übertragungsrate erzeugt, mit den folgenden Schritten auf den Wert der gewünschten Übertragungsrate erhöht wird:

i) Aufteilung des erzeugten Zuges in N identische Wege, wobei N > 1 eine ganze Zahl ist;
ii) Einführung einer relativen Verzögerung zwischen den N Wegen, wobei diese Verzögerung gleich $q_L/N$ ist, und $q_L$ das zwischen den Pulsen des erzeugten Zuges vorliegende Zeitintervall ist, und
iii) Rekombinierung der N Wege, was zu einem Pulszug führt, dessen Zeitintervall zwischen aufeinanderfolgenden Pulsen, $q_0 = q_L/N$ dem Zeitfenster der gewünschten Rate entspricht,

wobei die Stabilisierung, mittels APH, des Zuges mit der die gewünschten Rate vor der Rekombinierung durchgeführt wird, d.h. auf jedem der N Wege getrennt, und das gemäß einem Protokoll, das nach Rekombinierung der N Wege den Erhalt einer Alternierung jeweils der Phasen oder Polarisationen zuläßt.

6. Verfahren nach Anspruch 5, dadurch gekennzeichnet, daß die Codierung jedes der N Wege getrennt vor der Rekombinierung gemäß dem Protokoll durchgeführt wird, so daß nach der Rekombinierung der N Wege in einen einzigen Zug ein einziger Informationskanal erhalten wird.

7. Verfahren nach Anspruch 5, dadurch gekennzeichnet, daß die Codierung der N Wege vor der Rekombinierung unabhängig auf jedem der N Wege durchgeführt wird, wobei jeder Weg folglich einen unabhängigen Informationskanal aufstellt, so daß nach Rekombinierung der N Wege die N Informationskanäle verflochten sind und die Übertragung der unabhängigen Kanäle in Form eines Zeitmultiplex ermöglichen, wobei der Empfang des Pulszuges mit der gewünschten Pulsrate mittels eines Erfassungsschrittes auf N Kanälen erhalten wird, und der Empfang der N unabhängigen Erfassungskanäle mittels eines zeitlichen Demultiplexens durchgeführt wird.

8. System für die optische Übertragung wenigstens eines Solitonenzuges über sehr lange Distanz, mit:

- Mitteln zum Erzeugen (E) wenigstens eines Zuges von Lichtpulsen, wobei jeder Puls in das Innere eines Zeit fensters ausgesendet wird, die aufeinanderfolgenden Zeitfenster benachbart und von gleicher Dauer sind, die Lichtpulse außerdem von gleicher Form und gleicher Amplitude sind, die Amplitude größer als ein Schwellwert ist, der zum Erhalt von Pulsen mit einer Solitoneneigenschaft während der Ausbreitung des Zuges in einer Einwellen-Lichtfaser erforderlich ist;
- Mittel zum Codieren der Lichtpulse des Zuges, um darin zu übertragende Informationen einzugeben;
- Mittel zum Eingeben oder zum Koppeln des Zuges codierter Pulse in die Lichtfaser;
- Mittel (Tf) zur Ausbreitung der Lichtpulse in Form von Solitonenpulsen, wobei diese Ausbreitungsmittel durch die Einwellen-Lichtfaser gebildet werden, die über die Lichtwellenlänge der Pulse einen nichtlinearen Brechungsindex und eine anormale Dispersion für die Gruppengeschwindigkeit der Lichtpulse aufweisen;
- Mittel zur optischen Verstärkung (AO) der Solitonenpulse während ihrer Ausbreitung in der Faser;

- Mittel (R) zum Empfang und zur Decodierung des Zuges von Solitonenpulsen,

dadurch gekennzeichnet, daß es außerdem Mittel für die Stabilisierung jedes Solitons im Inneren seines Zeitfensters aufweist, und damit zur Stabilisierung des Solitonenzuges, durch Einführung einer repulsiven Wechselwirkung zwischen jedem Soliton und den beiden benachbarten Solitonen, das unmittelbar Vorhergehende und das unmittelbar Nachfolgende, wobei diese Stabilisierungsmittel durch wenigstens einen Modulator der optischen Phase (MPO) der Solitonen gebildet werden, der eine Alternierung der Phasen O und π zwischen aufeinanderfolgenden Solitonen erzeugt.

9. System nach Anspruch 8, dadurch gekennzeichnet, daß die Codierungsmittel wenigstens einen Modulator der Polarisation der Solitonen (MPP) aufweisen, um die stabilisierte Eigenschaft des Solitonenzuges zu erhalten, d.h. die repulsive Eigenschaft, welche die Wechselwirkungen zwischen benachbarten Solitonen stabilisiert.

10. System nach Anspruch 9, dadurch gekennzeichnet, daß die Empfangsmittel (R) des Solitonenzuges Mittel zur Diskrimination zwischen der die Codierung der Solitonen erzeugenden Modulation und der die Stabilisierung der Solitonen erzeugenden Modulation aufweisen.

11. System nach einem der Ansprüche 9 und 10, dadurch gekennzeichnet, daß der Wert der erzeugten Rate, wenn die Mittel zum Erzeugen des Zuges von Lichtpulsen eine Pulsrate kleiner als eine gewünschte Übertragungsrate erzeugen, mit folgenden Mitteln auf den Wert der gewünschten Übertragungsrate angehoben wird:

   i) Mittel (Sp) zum Aufteilen des erzeugten Zuges in N identische Wege, wobei N > 1 eine ganze Zahl ist;
   ii) Mittel (Rt), die eine relative Verzögerung zwischen den N Wegen einführen, wobei diese Verzögerung gleich $q_L/N$ ist, und $q_L$ das Zeitintervall ist, das zwischen den Pulsen des erzeugten Zuges vorliegt, und
   iii) Mittel (Rc) zur Rekombinierung der N Wege, was zu einem Pulszug führt, dessen Zeitintervall zwischen aufeinanderfolgenden Pulsen, $q_0$ = $q_L/N$, dem Zeitfenster der gewünschten Rate entspricht.

wobei die Mittel zur Stabilisierung, durch APH, des Zuges mit der gewünschten Rate vor den Rekombinierungsmitteln wirksam werden, d.h. auf jedem der N Wege getrennt, und das gemäß einem Protokoll, das den Erhalt, nach Rekombinierung der N Wege, einer Alternierung jeweils der Phasen oder der Polarisationen zuläßt.

12. System nach Anspruch 11, dadurch gekennzeichnet, daß die Codierungsmittel vor Rekombinierung auf jedem der N Wege getrennt gemäß dem Protokoll wirksam werden, so daß nach Rekombinierung der N Wege in einen einzigen Zug, sie einen einzigen Informationskanal ergeben.

13. System nach Anspruch 11, dadurch gekennzeichnet, daß die Mittel zur Codierung der N Wege vor Rekombinierung unabhängig auf jedem der N Wege wirksam werden, wobei jeder Weg damit einen unabhängigen Informationskanal aufstellt, so daß die Rekombinierungsmittel insofern als Multiplexer der N unabhängigen Informationskanäle wirksam werden, die Mittel zum Empfang des Pulszuges mit der gewünschten Pulsrate Erfassungseinrichtungen auf N Kanälen aufweisen, und ein Demultiplexer den Empfang der N unabhängigen Erfassungskanäle bewirkt.

14. Sender (E) wenigstens eines Solitonenzuges, mit:

- Mitteln zum Erzeugen wenigstens eines Zuges von Lichtpulsen, wobei jeder Puls in das Innere eines Zeitfensters eingegeben wird, die aufeinanderfolgenden Zeitfenster benachbart und von gleicher Dauer sind, die Lichtpulse außerdem von gleicher Form und gleicher Amplitude sind, die Amplitude größer als ein Schwellwert ist, der zum Erhalt von Pulsen mit einer Solitoneneigenschaft während der Ausbreitung des Zuges in einer Einwellen-Lichtfaser erforderlich ist;
- Mitteln zum Codieren der Lichtpulse des Zuges, um darin zu übertragende Informationen einzugeben;
- Mitteln zum Eingeben oder zur Kopplung des Zuges codierter Pulse in die Lichtfaser;

dadurch gekennzeichnet, daß er außerdem Mittel für die Stabilisierung jedes Solitons im Inneren seines Zeitfensters aufweist, und damit zur Stabilisierung des Solitonenzuges, durch Einführung einer repulsiven Wechselwirkung zwischen jedem Soliton und seinen beiden benachbarten Solitonen, dem unmittelbar Vorhergehenden und dem unmittelbar Nachfolgenden, wobei diese Stabilisierungsmittel durch wenigstens einen Modulator der optischen Phase der Solitonen gebildet werden, der eine Phasenalternierung 0 und π zwischen aufeinanderfolgenden Solitonen erzeugt.

15. Sender (E) nach Anspruch 14, dadurch gekennzeichnet, daß die Codierungsmittel wenigstens einen Modulator der Polarisation der Solitonen aufweisen, um die stabilisierte Eigenschaft des Solitonenzuges zu erhalten, d.h. die repulsive Eigenschaft, welche die Wechselwirkungen zwischen aufeinanderfolgenden Solitonen stabilisiert.

16. Sender (E) nach Anspruch 15, dadurch gekennzeichnet, daß der Wert der erzeugten Rate, wenn die Mittel zur Erzeugung des Zuges von Lichtpulsen eine Pulsrate kleiner als eine gewünschte Übertragungsrate erzeugen, mit folgenden Mitteln auf den Wert der gewünschten Übertragungsrate angehoben wird:

     i) Mittel (Sp) zum Aufteilen des erzeugten Zuges in N identische Wege, wobei N > 1 eine ganze Zahl ist;
     ii) Mittel (Rt), die eine relative Verzögerung zwischen den N Wegen einführen, wobei diese Verzögerung gleich $q_L/N$ ist, und $q_L$ das Zeitintervall ist, das zwischen den Pulsen des erzeugten Zuges vorliegt, und
     iii) Mittel (Rc) zur Rekombinierung der N Wege, was zu einem Pulszug führt, dessen Zeitintervall zwischen aufeinanderfolgenden Pulsen, $q_0$ = $q_L/N$, dem Zeitfenster der gewünschten Rate entspricht,

wobei die Mittel zur Stabilisierung, durch APH, des Zuges mit der gewünschten Rate vor den Rekombinierungsmitteln wirksam werden, d.h. auf jedem der N Wege getrennt, und das gemäß einem Protokoll, das den Erhalt, nach Rekombinierung der N Wege, einer Alternierung jeweils der Phasen oder der Polarisationen zuläßt.

17. Sender (E) nach Anspruch 16, dadurch gekennzeichnet, daß die Codierungsmittel vor Rekombinierung auf jedem der N Wege getrennt gemäß dem Protokoll wirksam werden, so daß, nach Rekombinierung der N Wege in einen einzigen Zug, dies einen einzigen Informationskanal ergibt.

18. Sender (E) nach Anspruch 16, dadurch gekennzeichnet, daß die Codierungsmittel der N Wege vor Rekombinierung unabhängig auf jedem der N Wege wirksam werden, wobei jeder Weg damit einen unabhängigen Informationskanal bildet, so daß die Rekombinierungsmittel insofern als Multiplexer der N unabhängigen Informationskanäle wirksam werden, wobei die Mittel zum Empfang des Pulszuges mit der gewünschten Pulsrate Erfassungseinrichtungen auf N Kanälen aufweisen, und ein Demultiplexer den Empfang der N unabhängigen Erfassungskanäle durchführt.

19. Empfänger (R) wenigstens eines Solitonenzuges, dadurch gekennzeichnet, daß er Mittel zur Diskrimination zwischen einer die Decodierung der Solitonen erzeugenden Modulation und einer eine Stabilisierung des Solitonenzuges erzeugenden Modulation aufweist durch Einführung einer repulsiven Wechselwirkung zwischen jedem Soliton und den beiden benachbarten Solitonen, dem unmittelbar Vorhergehenden und dem unmittelbar Nachfolgenden, die durch Modulation der optischen Phase der Solitonen erhalten wird, die eine Alternierung der Phasen 0 und $\pi$ zwischen aufeinanderfolgenden Solitonen erzeugt, wobei der Zug durch Alternierung der Phase, APH, stabilisiert wird, und die Codierung der Solitonen durch Modulation der Polarisation erhalten wird, und die Diskriminationsmittel durch ein Polarisationstrennmittel gebildet werden.

20. Empfänger (R) nach Anspruch 19, dadurch gekennzeichnet, daß er, wenn er einen Zug mit einer Solitonenübertragungsrate größer als eine gewünschte Empfangsrate empfängt, einerseits Empfangsmittel mit Erfassungseinrichtungen auf N Wegen, wobei N > 1 eine ganze Zahl ist, und andererseits einen den Empfang der N unabhängigen Erfassungswege bewirkenden Demultiplexer aufweist.

EP 0 576 358 B1

E    Tf    AO    Tf    AO    AO    Tf    R

## FIG.1

0   π   0   π   0   π   0

APH

## FIG.2

0   π   0   π   0   π

APH

## FIG.3

x

z

y

## FIG.5

FIG.4